# EUROPÄISCHE PATENTSCHRIFT

(11) **EP 3 374 112 B1**
(45) Veröffentlichungstag und Bekanntmachung des Hinweises auf die Patenterteilung: **15.02.2023**
(21) Anmeldenummer: 16790621.3
(22) Anmeldetag: 04.11.2016
(51) Int. Cl.: B23B 51/02

(54) **BOHRWERKZEUG**
DRILLING TOOL
OUTIL DE FORAGE

(30) Priorität: 09.11.2015 DE 102015221957; 03.11.2016 DE 102016221515
(43) Veröffentlichungstag der Anmeldung: 19.09.2018
(73) Patentinhaber: Robert Bosch GmbH, 70442 Stuttgart (DE)
(72) Erfinder: WIDMANN, Rainer, 88285 Bodnegg (DE); VOLZ, Alexander, 88255 Baienfurt (DE); ANGHILERI, Massimo, 4500 Solothurn (CH); KEDERER, Miriam, 4528 Zuchwil (CH); QIU, Xiao, 88250 Weingarten (DE)
(86) Internationale Anmeldenummer: PCT/EP2016/076648
(87) Internationale Veröffentlichungsnummer: WO 2017/080917

(56) Entgegenhaltungen:
- EP-A1- 2 845 672
- WO-A1-2015/029963
- DE-A1-102011 016 686
- DE-U1- 20 108 179
- FR-A1- 2 808 462
- JP-A- H08 155 713
- KR-A- 20130 004 432

## Beschreibung

### Stand der Technik

Die Vorliegende Erfindung betrifft ein Bohrwerkzeug nach dem Oberbegriff des Anspruchs 1. Ein solches Bohrwerkzeug ist aus der WO 2015/029963 A1 bekannt. Die Erfindung betrifft auch ein Verfahren zur Herstellung eines Bohrwerkzeugs.

Aus DE 100 11 108 A1 ist bereits ein Bohrwerkzeug, insbesondere ein Gesteinsbohrwerkzeug, für eine tragbare Werkzeugmaschine, mit einer Rotationsachse und mit zumindest einem Spiralgang, der sich entlang der Rotationsachse um die Rotationsachse windet, bekannt. Der Spiralgang weist zumindest eine Verschleißfläche auf.

Offenbarung der Erfindung

Erfindungsgemäß wird ein Bohrwerkzeug durch die Merkmale des Anspruchs 1 definiert. Bevorzugte Ausführungsformen der vorliegenden Erfindung sind in den abhängigen Ansprüche definiert.

Die Erfindung geht aus von einem Bohrwerkzeug, insbesondere von einem Gesteinsbohrwerkzeug, für eine tragbare Werkzeugmaschine, mit einer Rotationsachse und mit zumindest einem Spiralgang, der sich entlang der Rotationsachse um die Rotationsachse windet, wobei der Spiralgang zumindest eine Verschleißfläche aufweist.

Es wird vorgeschlagen, dass das Bohrwerkzeug zumindest einen Verschleißflächenübergang aufweist, an dessen Position sich zumindest eine Bandbreite der Verschleißfläche verändert. Bevorzugt ist der zumindest eine Spiralgang helixartig um die Rotationachse angeordnet. Der zumindest eine Spiralgang kann rechtsgängig oder linksgängig verlaufen. Insbesondere weist das Bohrwerkzeug entlang der Rotationsachse eine maximale Erstreckung auf. Bevorzugt ist die maximale Erstreckung kleiner als 1000 mm, bevorzugt kleiner als 500 mm und besonders bevorzugt kleiner als 200 mm und ganz besonders bevorzugt größer als 40 mm. Vorzugsweise erstreckt sich der Spiralgang des Bohrwerkzeugs, entlang der Rotationsachse betrachtet, ausgehend von einem Bohrkopf des Bohrwerkzeugs zumindest im Wesentlichen bis zu einem Schaft des Bohrwerkzeugs. Vorzugsweise erstreckt sich der zumindest eine Spiralgang zwischen dem Bohrkopf und dem Schaft. Insbesondere kann der Schaft als Rundschaft, als hexagonaler Schaft oder als SDSO-Schaft (SDS^{®}-max, SDS^{®}-top, SDSO-plus, SDS^{®}-quick) ausgebildet sein. Bevorzugt ist der Spiralgang als Spiralkörper des Bohrwerkzeugs ausgebildet, der einen zumindest im Wesentlichen konstanten maximalen Durchmesser aufweist. Insbesondere weist der Spiralkörper einen maximalen Durchmesser von kleiner als 100 mm, bevorzugt kleiner als 50 mm, besonders bevorzugt kleiner als 20 mm und ganz besonders bevorzugt größer als 1 mm auf. Besonders bevorzugt ist der Spiralkörper hartmetallfrei ausgebildet. Es ist jedoch auch denkbar, dass der Spiralkörper aus einem Hartmetall gebildet ist. Ebenso ist es denkbar, dass das Bohrwerkzeug zumindest einen weiteren Spiralgang oder eine Vielzahl an weiteren Spiralgängen aufweist, der/die zumindest im Wesentlichen alle im Vorangegangenen und im Weiteren beschriebenen Merkmale des Spiralgangs umfasst/umfassen. Insbesondere ist der Bohrkopf aus einem Hartmetall gebildet oder weist eine Hartmetallbeschichtung auf. Es ist jedoch auch denkbar, dass der Bohrkopf aus einem anderen, einem Fachmann als sinnvoll erscheinenden Werkstoff gebildet ist oder eine andere, einem Fachmann als sinnvoll erscheinende Beschichtung aufweist. Der Bohrkopf kann beispielsweise alternativ aus einer Keramik gebildet sein oder beispielsweise eine mittels einer physikalischen Gasphasenabscheidung (PVD) erzeugte Beschichtung aufweisen. Vorzugsweise ist der Bohrkopf direkt angrenzend an den Spiralgang angeordnet, insbesondere einteilig mit dem Spiralgang ausgebildet. Unter "einteilig" soll insbesondere zumindest stoffschlüssig verbunden verstanden werden, beispielsweise durch einen Schweißprozess, einen Lötprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Der Bohrkopf kann ein oder mehrere Hartmetallschneidplatten aufweisen. Der Bohrkopf kann einen oder mehrere Schneidstege aufweisen, die sich quer zur Rotationsachse erstrecken. Vorzugsweise ist/sind zumindest an den/dem Schneidsteg/en eine Hartmetallschneidplatte, eine Hartmetallbeschichtung o. dgl. zu einer Bearbeitung eines Werkstücks angeordnet. Der Bohrkopf kann in einer zumindest im Wesentlichen senkrecht zur Rotationsachse verlaufenden Ebene eine linienförmige, eine polygonale, eine dreizackförmige, eine kreuzförmige, eine sternförmige oder eine andere, einem Fachmann als sinnvoll erscheinende Ausgestaltung aufweisen. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist.

Unter einer "Verschleißfläche des Spiralgangs" soll in diesem Zusammenhang insbesondere eine äußerste Fläche des Spiralgangs verstanden werden, die sich ausgehend vom Bohrkopf bis zum Schaft entlang der Rotationsachse um 360 ° um die Rotationsachse windet. Vorzugsweise weist die Verschleißfläche, entlang einer zumindest im Wesentlichen senkrecht zur Rotationsachse verlaufenden Richtung betrachtet, im Vergleich zu anderen Elementen und/oder Flächen des Spiralgangs einen größten Abstand zur Rotationsachse auf. Insbesondere kann die Verschleißfläche bei einer Bearbeitung eines Werkstücks in direktem Kontakt mit einem Werkstück sein. Vorzugsweise weist die Verschleißfläche eine Beschichtung auf, die dazu vorgesehen ist, eine Reibung mit dem Werkstück während einer Bearbeitung gering zu halten. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Vorzugsweise verläuft die Verschleißfläche helixartig um die Rotationsachse. Insbesondere weist die Verschleißfläche zumindest eine Bandbreite und zumindest eine Verschleißflächenlänge auf. Unter einer "Bandbreite der Verschleißfläche" soll in diesem Zusammenhang insbesondere eine maximale Abmessung eines Teilabschnitts der Verschleißfläche entlang einer zumindest im Wesentlichen parallel zur Rotationsachse verlaufenden Richtung verstanden werden, wobei der Teilabschnitt der Verschleißfläche, betrachtet entlang der Rotationsache, zwischen zwei Förderwendeltiefpunkten angeordnet ist, die einen minimalen Abstand zur Rotationsachse aufweisen. Insbesondere weist die Bandbreite eine maximale Abmessung von weniger als 50 mm, bevorzugt weniger als 10 mm und besonders bevorzugt weniger als 5 mm auf. Besonders bevorzugt weist die maximale Abmessung einen Wert aus einem Wertebereich von 0 mm bis 10 mm auf. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist.

Besonders bevorzugt weist der Spiralgang zumindest eine Förderwendel auf. Die Förderwendel des Spiralgangs ist vorzugsweise dazu vorgesehen, insbesondere infolge einer Rotation des Bohrwerkzeugs um die Rotationsachse des Bohrwerkzeugs, Werkstückabtrag bei einer Bearbeitung eines Werkstücks abzutransportieren, insbesondere infolge eines Zusammenwirkens mit einer Förderwendel eines weiteren Spiralgangs des Bohrwerkzeugs. Insbesondere ist der Spiralgang dazu vorgesehen, bei einer Bearbeitung eines Werkstücks mittels der Förderwendel Bohrmehl aus einem Bohrloch des Werkstücks abzutransportieren. Vorzugsweise weist die Förderwendel an einer Oberfläche der Förderwendel eine Beschichtung und/oder eine Struktur auf, die dazu vorgesehen ist, eine Förderung von Bohrmehl aus dem Bohrloch zu ermöglichen, insbesondere positiv zu beeinflussen, wie beispielsweise durch einen hohen Reibungswiderstand o. dgl. Die Förderwendel weist vorzugsweise zumindest einen Förderwendeltiefpunkt auf, der einen minimalen Abstand zur Rotationsachse aufweist. Ferner weist die Verschleißfläche eine Begrenzungskante und eine weitere Begrenzungskante auf, die die Bandbreite entlang einer zumindest im Wesentlichen parallel zur Rotationsachse verlaufenden Richtung begrenzen. Insbesondere grenzt die Begrenzungskante direkt an die Förderwendel an. Vorzugsweise geht die Begrenzungskante entlang einer zumindest im Wesentlichen parallel zur Rotationsachse verlaufenden Richtung in die Förderwendel über. Insbesondere grenzt die weitere Begrenzungskante direkt an eine weitere Förderwendel an. Vorzugsweise geht die weitere Begrenzungskante entlang einer zumindest im Wesentlichen parallel zur Rotationsachse verlaufenden Richtung in die weitere Förderwendel über.

Insbesondere weist die Begrenzungskante zumindest einen maximalen Steigungswinkel, insbesondere einen maximalen Gangwinkel, zur Rotationsachse auf, der zumindest im Wesentlichen von Null verschieden ist. Zudem weist die weitere Begrenzungskante vorzugsweise zumindest einen maximalen Steigungswinkel zur Rotationsachse auf, der zumindest im Wesentlichen von Null verschieden ist. Insbesondere weist die Begrenzungskante einen maximalen Steigungswinkel zur Rotationsachse auf, der kleiner ist als 90°, bevorzugt kleiner ist als 60° und besonders bevorzugt kleiner ist als 30° und ganz besonders bevorzugt größer ist als 0°. Bevorzugt weist die Begrenzungskante einen maximalen Steigungswinkel, insbesondere einen maximalen Gangwinkel, zur Rotationsachse auf, der einem Wert aus einem Wertebereich von 35° bis 45° entspricht, insbesondere bei einer Ausgestaltung des Bohrwerkzeugs mit dem Spiralgang und dem weiteren Spiralgang. Vorzugsweise weist die weitere Begrenzungskante zumindest einen maximalen Steigungswinkel zur Rotationsachse auf, der kleiner ist als 90°, bevorzugt kleiner ist als 60° und besonders bevorzugt kleiner ist als 30° und ganz besonders bevorzugt größer ist als 0°. Bevorzugt weist die weitere Begrenzungskante einen maximalen Steigungswinkel, insbesondere einen maximalen Gangwinkel, zur Rotationsachse auf, der einem Wert aus einem Wertebereich von 35° bis 45° entspricht, insbesondere bei einer Ausgestaltung des Bohrwerkzeugs mit dem Spiralgang und dem weiteren Spiralgang. Unter einer "Verschleißflächenlänge der Verschleißfläche" soll in diesem Zusammenhang insbesondere eine maximale Windungserstreckung der Verschleißfläche von einem Bohrkopf des Bohrwerkzeugs bis zu einem Schaft des Bohrwerkzeugs, von einem Bohrkopf des Bohrwerkzeugs bis zu einem Verschleißflächenübergang, von einem Verschleißflächenübergang zu einem weiteren Verschleißflächenübergang oder von einem Verschleißflächenübergang bis zu einem Schaft des Bohrwerkzeugs verstanden werden.

Unter einem "Verschleißflächenübergang des Bohrwerkzeugs" soll in diesem Zusammenhang insbesondere eine Position entlang eines Gesamtverlaufs zumindest eines Spiralgangs des Bohrwerkzeugs verstanden werden, an der eine Änderung zumindest einer Kenngröße, die die Verschleißfläche definiert, erfolgt. Insbesondere ist der Verschleißflächenübergang verschieden von einem Übergang zwischen dem Bohrkopf und dem Spiralkörper und/oder von einem Übergang zwischen dem Spiralkörper und dem Schaft des Bohrwerkzeugs. Besonders bevorzugt ist der Verschleißflächenübergang verschieden von einer Stufe eines Stufenbohrers ausgebildet. Das Bohrwerkzeug kann einen einzelnen Verschleißflächenübergang oder eine Vielzahl an Verschleißflächenübergängen aufweisen, insbesondere über einen Gesamtverlauf zumindest eines Spiralgangs oder mehrerer Spiralgänge des Bohrwerkzeugs betrachtet. Vorzugsweise verändert sich an der Position des Verschleißflächenübergangs die Bandbreite der Verschleißfläche. Ebenso ist es denkbar, dass das Bohrwerkzeug zumindest einen weiteren Verschleißflächenübergang aufweist, an dessen Position die Bandbreite eine weitere Änderung aufweist. Zudem ist es denkbar, dass das Bohrwerkzeug zumindest mehr als zwei Verschleißflächenübergange aufweist, an deren Positionen die Bandbreite eine weitere Änderung aufweist.

Vorzugsweise ist das Bohrwerkzeug zumindest im Wesentlichen aus einem Stahl gefertigt. Ebenso ist es denkbar, dass das Bohrwerkzeug aus einem anderen, einem Fachmann als sinnvoll erscheinenden Werkstoff gefertigt ist. Durch die erfindungsgemäße Ausgestaltung des Bohrwerkzeugs können vorteilhaft unterschiedliche Verschleißflächen, entlang der Rotationsachse betrachtet, in Abhängigkeit eines zu bearbeitenden Werkstücks realisiert werden. Des Weiteren kann vorteilhaft in einem Bereich des Bohrwerkzeugs, in dem ein großer Beanspruchungsgrad bei einer Bearbeitung eines Werkstücks erwartbar ist, eine große Verschleißfläche realisiert werden. Zudem kann vorteilhaft in einem Bereich des Bohrwerkzeugs, in dem ein kleiner Beanspruchungsgrad bei einer Bearbeitung eines Werkstücks erwartbar ist, eine kleine Verschleißfläche realisiert werden. Des Weiteren kann vorteilhaft in einem Bereich mit einer kleinen Verschleißfläche Reibung zwischen dem Bohrwerkzeug und einer Werkstückoberfläche eines zu bearbeitenden Werkstücks gering gehalten werden. Es kann vorteilhaft eine schnelle Rotationsgeschwindigkeit des Bohrwerkzeugs entlang der Rotationsachse erreicht werden. Vorteilhafterweise kann, entlang der Rotationsachse des Bohrwerkzeugs betrachtet, senkrecht zur Rotationsachse eine gleichmäßige Abnutzung des Bohrwerkzeugs erreicht werden. Es kann eine große Stabilität des Bohrwerkzeugs bei einer Bearbeitung eines Werkstücks ermöglicht werden.

Ferner wird vorgeschlagen, dass die Bandbreite, entlang der Rotationsachse betrachtet, nach dem Verschleißflächenübergang abnimmt. Insbesondere ist die Bandbreite in einem bohrkopfnahen Bereich des Spiralgangs größer als in einem schaftnahen Bereich des Spiralgangs. Unter einem "bohrkopfnahen Bereich des Spiralgangs" soll in diesem Zusammenhang insbesondere ein Bereich des Spiralgangs verstanden werden, der entlang einer zumindest im Wesentlichen parallel, insbesondere koaxial, zur Rotationsachse verlaufenden Richtung einen minimalen Abstand relativ zum Schaft aufweist, der größer ist als 50 % der maximalen Erstreckung des Bohrwerkzeugs, bevorzugt größer ist als 70 % der maximalen Erstreckung des Bohrwerkzeugs, besonders bevorzugt größer ist als 80 % der maximalen Erstreckung des Bohrwerkzeugs und ganz besonders bevorzugt kleiner ist als 99 % der maximalen Erstreckung des Bohrwerkzeugs. Vorzugsweise ist die Bandbreite im schaftnahen Bereich kleiner als im bohrkopfnahen Bereich. Unter einem "schaftnahen Bereich" soll in diesem Zusammenhang insbesondere ein Bereich des Spiralgangs verstanden werden, der entlang einer zumindest im Wesentlichen parallel, insbesondere koaxial, zur Rotationsachse verlaufenden Richtung einen minimalen Abstand relativ zum Bohrkopf, insbesondere zu einer Bohrkopfspitze des Bohrkopfs, aufweist, der größer ist als 50 % der maximalen Erstreckung des Bohrwerkzeugs, bevorzugt größer ist als 70 % der maximalen Erstreckung des Bohrwerkzeugs, besonders bevorzugt größer ist als 80 % der maximalen Erstreckung des Bohrwerkzeugs und ganz besonders bevorzugt kleiner ist als 99 % der maximalen Erstreckung des Bohrwerkzeugs. Bevorzugt nimmt die Bandbreite, entlang der Rotationsachse ausgehend vom bohrkopfnahen Bereich in Richtung des schaftnahen Bereichs betrachtet, nach dem Verschleißflächenübergang ab. Besonders bevorzugt ist die Bandbreite, entlang der Rotationsachse ausgehend vom bohrkopfnahen Bereich betrachtet, nach dem Verschleißflächenübergang kleiner als vor dem Verschleißflächenübergang. Insbesondere nimmt die Bandbreite nach dem Verschleißflächenübergang um mehr als 5 %, bevorzugt um mehr als 25 % und besonders bevorzugt um mehr als 50 % im Vergleich zu einer Ausgestaltung der Bandbreite vor dem Verschleißflächenübergang ab. Es ist jedoch auch denkbar, dass die Bandbreite, entlang der Rotationsachse betrachtet, nach dem Verschleißflächenübergang zunimmt. Mittels der erfindungsgemäßen Ausgestaltung des Bohrwerkzeugs kann in einem Bereich des Bohrwerkzeugs, in dem ein großer Beanspruchungsgrad bei einer Bearbeitung eines Werkstücks vorliegt, eine größere Verschleißfläche realisiert werden im Vergleich zu einem Bereich, in dem ein kleiner Beanspruchungsgrad bei einer Bearbeitung eines Werkstücks vorliegt. Vorteilhafterweise kann im bohrkopfnahen Bereich des Bohrwerkzeugs, eine größere Verschleißfläche realisiert werden im Vergleich zum schaftnahen Bereich, der, entlang der Rotationsachse ausgehend vom bohrkopfnahen Bereich betrachtet, nach dem Verschleißflächenübergang angeordnet ist, da insbesondere der bohrkopfnahe Bereich des Bohrwerkzeugs während einer Bearbeitung eines Werkstücks lange und oft mit dem zu bearbeitenden Werkstück zum Einsatz kommt.

Zudem wird vorgeschlagen, dass die Verschleißfläche, entlang der Rotationsachse betrachtet, nach dem Verschleißflächenübergang abnimmt, insbesondere betrachtet in Bezug auf Teilflächen entlang des Gesamtverlaufs des Spiralgangs. Bevorzugt ändert sich zumindest eine Gesamtanzahl von Teilflächen der Verschleißfläche. Vorzugsweise ist die Verschleißfläche im bohrkopfnahen Bereich im Vergleich zur Verschleißfläche im schaftnahen Bereich groß. Vorzugsweise ist die Verschleißfläche im schaftnahen Bereich im Vergleich zur Verschleißfläche im bohrkopfnahen Bereich klein. Bevorzugt nimmt die Verschleißfläche, entlang der Rotationsachse ausgehend vom bohrkopfnahen Bereich betrachtet, nach dem Verschleißflächenübergang ab. Besonders bevorzugt ist die Verschleißfläche, entlang der Rotationsachse ausgehend vom bohrkopfnahen Bereich betrachtet, nach dem Verschleißflächenübergang kleiner als vor dem Verschleißflächenübergang. Insbesondere nimmt die Verschleißfläche nach dem Verschleißflächenübergang um mehr als 5 %, bevorzugt um mehr als 25 % und besonders bevorzugt um mehr als 50 % im Vergleich zu einer Ausgestaltung der Verschleißfläche vor dem Verschleißflächenübergang ab. Vorteilhafterweise kann erreicht werden, dass in einem Bereich mit einer kleinen Verschleißfläche Reibung zwischen dem Bohrwerkzeug und einer Werkstückoberfläche bei einer Bearbeitung eines Werkstücks gering gehalten werden kann. Ferner kann vorteilhaft eine schnelle Rotationsgeschwindigkeit des Bohrwerkzeugs entlang der Rotationsachse erreicht werden. Vorteilhafterweise kann eine zumindest im Wesentlichen gleichmäßige Abnutzung des Bohrwerkzeugs über eine gesamte Spiralgangerstreckung in Abhängigkeit von einem Beanspruchungsgrad erreicht werden.

Ferner wird vorgeschlagen, dass sich eine Ganghöhe des zumindest einen Spiralgangs, entlang der Rotationsachse betrachtet, nach dem Verschleißflächenübergang verändert. Unter einer "Ganghöhe des zumindest einen Spiralgangs" soll in diesem Zusammenhang insbesondere eine zumindest im Wesentlichen parallel zur Rotationsachse verlaufende Strecke verstanden werden, die einer Projektion in eine zumindest im Wesentlichen parallel zur Rotationsachse verlaufenden Ebene einer zurückgelegten Strecke eines Punkts des Spiralgangs bei einer Drehung des Bohrwerkzeugs von 360° um die Rotationsachse zurücklegt. Insbesondere entspricht die Ganghöhe, entlang einer zumindest im Wesentlichen parallel zur Rotationsachse verlaufenden Richtung betrachtet, einem maximalen Abstand zwischen zwei benachbarten Begrenzungskanten von beabstandeten Teilflächen der Verschleißfläche. Insbesondere ergibt sich bei einer Vergrößerung oder Verkleinerung der Ganghöhe eine Vergrößerung oder Verkleinerung der Verschleißflächenlänge. Besonders bevorzugt verändert sich die Ganghöhe, ausgehend vom bohrkopfnahen Bereich entlang der Rotationsachse betrachtet, nach dem Verschleißflächenübergang. Mittels der erfindungsgemäßen Ausgestaltung des Bohrwerkzeugs kann vorteilhaft eine Änderung des Vortriebs in Abhängigkeit von einer Eindringtiefe des Bohrwerkzeugs in ein Werkstück realisiert werden. Ferner kann vorteilhaft mittels der Ganghöhe die Verschleißflächenlänge verändert werden. Es kann vorteilhaft die Verschleißfläche einem Beanspruchungsgrad des Bohrwerkzeugs bei einer Bearbeitung eines Werkstücks nach dem Verschleißflächenübergang angepasst werden. Vorteilhafterweise kann, entlang der Rotationsachse des Bohrwerkzeugs betrachtet, senkrecht zur Rotationsachse eine gleichmäßige Abnutzung des Bohrwerkzeugs erreicht werden. Es kann eine große Stabilität des Bohrwerkzeugs bei einer Bearbeitung eines Werkstücks ermöglicht werden.

Des Weiteren wird vorgeschlagen, dass die Ganghöhe, entlang der Rotationsachse betrachtet, nach dem Verschleißflächenübergang zunimmt. Insbesondere ist die Ganghöhe im schaftnahen Bereich im Vergleich zur Ganghöhe im bohrkopfnahen Bereich groß. Vorzugsweise ist die Ganghöhe im bohrkopfnahen Bereich im Vergleich zur Ganghöhe schaftnahen Bereich klein. Bevorzugt nimmt die Ganghöhe, ausgehend vom bohrkopfnahen Bereich entlang der Rotationsachse in Richtung des Schafts betrachtet, nach dem Verschleißflächenübergang zu. Besonders bevorzugt ist die Ganghöhe, entlang der Rotationsachse ausgehend vom bohrkopfnahen Bereich in Richtung des Schafts betrachtet, nach dem Verschleißflächenübergang größer als vor dem Verschleißflächenübergang. Insbesondere nimmt die Ganghöhe nach dem Verschleißflächenübergang um mehr als 5 %, bevorzugt um mehr als 10 % und besonders bevorzugt um mehr als 25 % im Vergleich zu einer Ausgestaltung der Verschleißfläche vor dem Verschleißflächenübergang zu. Es ist jedoch auch denkbar, dass die Ganghöhe, entlang der Rotationsachse betrachtet, nach dem Verschleißflächenübergang abnimmt. Mittels der erfindungsgemäßen Ausgestaltung des Bohrwerkzeugs kann vorteilhaft ein hoher Vortrieb in einem Werkstück realisiert werden. Zudem kann vorteilhaft in einem Bereich des Bohrwerkzeugs, in dem ein großer Beanspruchungsgrad des Bohrwerkzeugs bei einer Bearbeitung eines Werkstücks vorliegt, eine kleinere Ganghöhe und somit eine größere Verschleißfläche realisiert werden im Vergleich zu einem Bereich, in dem ein kleiner Beanspruchungsgrad bei einer Bearbeitung eines Werkstücks vorliegt. Ferner kann vorteilhaft im bohrkopfnahen Bereich des Bohrwerkzeugs, der, entlang einer Richtung der Rotationsachse des Bohrwerkzeugs betrachtet, vor dem Verschleißflächenübergang angeordnet ist, eine kleinere Ganghöhe realisiert werden im Vergleich zu einem schaftnahen Bereich, der, entlang der Richtung der Rotationsachse des Bohrwerkzeugs betrachtet, nach dem Verschleißflächenübergang angeordnet ist.

Zudem wird vorgeschlagen, dass das Bohrwerkzeug zumindest einen Spiralgangwechsel aufweist, an dessen Position sich eine Anzahl an Spiralgängen ändert. Es ist denkbar, dass das Bohrwerkzeug, insbesondere das Gesteinsbohrwerkzeug, für eine tragbare Werkzeugmaschine zur Lösung einer erfindungsgemäßen Aufgabe und/oder zu einer Erreichung von erfindungsgemäßen Vorteilen in einer alternativen Ausgestaltung unabhängig von dem Verschleißflächenübergang ausgebildet ist. Vorzugsweise umfasst das Bohrwerkzeug in der alternativen Ausgestaltung, insbesondere in der unabhängig von dem Verschleißflächenübergang ausgebildeten Ausgestaltung, eine Rotationsachse, zumindest einen Spiralgang, der sich entlang der Rotationsachse um die Rotationsachse windet, wobei der Spiralgang zumindest eine Verschleißfläche aufweist, und zumindest einen Spiralgangwechsel, an dessen Position sich eine Anzahl an Spiralgängen ändert. Insbesondere ist der Spiralgangwechsel in einem Bereich des Spiralkörpers angeordnet, in welchem zumindest im Wesentlichen der Verschleißflächenübergang angeordnet ist. Der Spiralgangwechsel kann an derselben Position des Bohrwerkzeugs erfolgen, wie der Verschleißflächenübergang. Besonders bevorzugt ist der Spiralgangwechsel verschieden von einem Übergang zwischen dem Bohrkopf und dem Spiralkörper und/oder von einem Übergang zwischen dem Spiralkörper und dem Schaft des Bohrwerkzeugs. Ebenso ist es denkbar, dass das Bohrwerkzeug zumindest einen weiteren Spiralgangwechsel aufweist, an dessen Position sich eine Anzahl an Spiralgängen ändert. Es kann vorteilhaft über eine große Länge des Bohrwerkzeugs, entlang der Rotationsachse betrachtet, eine Förderung von einer großen Menge an Bohrmehl aus dem Bohrloch bei einer Bearbeitung eines Werkstücks erreicht werden. Es kann vorteilhaft die Verschleißfläche einem Beanspruchungsgrad des Bohrwerkzeugs bei einer Bearbeitung eines Werkstücks, entlang der Rotationsachse betrachtet, nach dem Spiralgangwechsel angepasst werden. Vorteilhafterweise kann, entlang der Rotationsachse betrachtet, senkrecht zur Rotationsachse eine gleichmäßige Abnutzung des Bohrwerkzeugs erreicht werden. Es kann eine besonders vorteilhafte Abstimmung des Bohrwerkzeugs auf einen Einsatzweck ermöglicht werden, insbesondere durch eine Anordnung von einer Vielzahl an Spiralgängen im bohrkopfnahen Bereich und eine Anordnung von einer geringen Anzahl an Spiralgängen im schaftnahen Bereich.

Des Weiteren wird vorgeschlagen, dass das Bohrwerkzeug zumindest einen maximalen Außendurchmesser, insbesondere einen Nenndurchmesser, zumindest eine Bohrkopfspitze und zumindest einen Spiralgangwechsel umfasst, an dessen Position sich eine Anzahl an Spiralgängen ändert, wobei der Spiralgangwechsel und/oder der Verschleißflächenübergang in einem Bereich und/oder an einer Position entlang der Rotationsachse angeordnet sind/ist, der und/oder die einen Minimalabstand zur Bohrkopfspitze aufweisen/aufweist, der größer ist als ein ganzzahliges Vielfaches des maximalen Außendurchmessers, insbesondere eines Abmessungswerts des maximalen Außendurchmessers. Unter einem "Vielfachen des maximalen Außendurchmessers" soll hier insbesondere ein mathematisches Produkt aus dem maximalen Abmessungswert und einer Zahl verstanden werden, wie beispielsweise 12 mm × 1, 12 mm × 2, 12 mm × 2,5, 25 mm × 3, o. dgl. Der Ausdruck "größer als ein ganzzahliges Vielfaches" soll insbesondere einen Wert definieren, der insbesondere zumindest um ein Hundertstell, bevorzugt zumindest um ein Zehntel größer ist als ein ganzzahliges Vielfaches eines Bezugswerts. Beispielsweise kann ein Wert, der größer ist als ein ganzzahliges Vielfaches eines Bezugswerts 1,01, 1,1, 1,15, 1, 25, 2,01, 2,1, 3,01, 3,1 o. dgl. betragen. Ferner ist es auch denkbar, dass das Bohrwerkzeug zusätzlich in einem Bereich zwischen der Bohrkopfspitze und dem Spiralgangwechsel und/oder dem Verschleißflächenübergang zumindest einen zusätzlichen Spiralgangwechsel aufweist, insbesondere bei einer Ausgestaltung des Bohrkopfs mit geradem Anlauf, bei dem vorzugsweise zumindest ein Spiralgang, insbesondere zumindest zwei Spiralgänge, direkt angrenzend an den Bohrkopf angeordnet ist/sind und vorzugsweise zumindest ein zusätzlicher Spiralgang, insbesondere zumindest zwei zusätzliche Spiralgänge, angrenzend an seitliche Planflächen des Bohrwerkzeugs im bohrkopfnahen Bereich angeordnet ist/sind. Vorzugsweise endet/enden der zumindest eine zusätzliche Spiralgang, insbesondere die zumindest zwei zusätzlichen Spiralgänge, bei einer Ausgestaltung des Bohrkopfs mit geradem Anlauf am Spiralgangwechsel und/oder am Verschleißflächenübergang. Bevorzugt erstreckt/erstrecken sich der zumindest eine zusätzliche Spiralgang, insbesondere die zumindest zwei zusätzlichen Spiralgänge, bei einer Ausgestaltung des Bohrkopfs mit geradem Anlauf ausgehend maximal von der seitlichen Planflächen des Bohrwerkzeugs im bohrkopfnahen Bereich bis zum Spiralgangwechsel und/oder zum Verschleißflächenübergang. Der maximale Außendurchmesser des Bohrwerkzeugs erstreckt sich zumindest im Wesentlichen senkrecht zur Rotationsachse des Bohrwerkzeugs. Vorzugsweise ist der maximale Außendurchmesser größer als 1 mm. Vorzugsweise ist der maximale Außendurchmesser kleiner als 100 mm. Es ist jedoch auch denkbar, dass der maximale Außendurchmesser einen von dem oben genannten Wert abweichenden Maximalwert oder Minimalwert aufweist. Die Bohrkopfspitze ist vorzugsweise auf der Rotationsachse angeordnet. Vorzugsweise ist die Bohrkopfspitze von einem Punkt des Bohrkopfs gebildet, der entlang einer zumindest im Wesentlichen parallel, insbesondere koaxial, zur Rotationsachse verlaufenden Richtung einen maximalen Abstand zum Schaft des Bohrwerkzeugs aufweist. Der Minimalabstand des Bereichs und/oder der Position, in dem/an dem der Spiralgangwechsel und/oder der Verschleißflächenübergang angeordnet ist, ist vorzugsweise ein kleinster Abstand des Bereichs und/oder der Position relativ zur Bohrkopfspitze entlang der Rotationsachse und/oder entlang einer zumindest im Wesentlichen parallel zur Rotationsachse verlaufenden Richtung. Mittels der erfindungsgemäßen Ausgestaltung des Bohrwerkzeugs kann vorteilhaft in einem Bereich des Bohrwerkzeugs, in dem ein gro-ßer Beanspruchungsgrad bei einer Bearbeitung eines Werkstücks vorliegt, eine große Verschleißfläche und/oder eine große Anzahl an Spiralgängen realisiert werden im Vergleich zu einem Bereich, in dem ein kleiner Beanspruchungsgrad bei einer Bearbeitung eines Werkstücks vorliegt. Vorteilhafterweise kann im bohrkopfnahen Bereich des Bohrwerkzeugs, eine große Verschleißfläche und/oder eine große Anzahl an Spiralgängen realisiert werden im Vergleich zum schaftnahen Bereich, der, entlang der Rotationsachse ausgehend vom bohrkopfnahen Bereich betrachtet, nach dem Verschleißflächenübergang und/oder nach dem Spiralgangwechsel angeordnet ist, da insbesondere der bohrkopfnahe Bereich des Bohrwerkzeugs während einer Bearbeitung eines Werkstücks lange und oft mit dem zu bearbeitenden Werkstück in Kontakt kommt.

Zudem wird vorgeschlagen, dass der Minimalabstand zur Bohrkopfspitze größer ist als ein zweifaches des maximalen Außendurchmessers. Insbesondere ist der Minimalabstand zur Bohrkopfspitze größer als ein 2,5-faches des maximalen Außendurchmessers, insbesondere eines Abmessungswerts des maximalen Außendurchmessers. Vorzugsweise erfolgt der Spiralgangwechsel und/oder der Verschleißflächenübergang frühestens an einer Position des Bohrwerkzeugs, die entlang einer zumindest im Wesentlichen parallel, insbesondere koaxial, zur Rotationsachse des Bohrwerkzeugs verlaufenden Richtung einen Minimalabstand relativ zur Bohrkopfspitze aufweist, der größer ist als ein doppelter Zahlenwert des maximalen Außendurchmessers, insbesondere bei einer Ausgestaltung des Bohrwerkzeugs ohne einen geraden Anlauf. Bevorzugt ist eine Anzahl an Spiralgängen im bohrkopfnahen Bereich groß. Vorzugsweise ist eine Anzahl an Spiralgängen im schaftnahen Bereich klein, insbesondere kleiner als im Vergleich zu einer Anzahl an Spiralgängen im bohrkopfnahen Bereich. Bevorzugt weist das Bohrwerkzeug im bohrkopfnahen Bereich vier Spiralgänge auf. Vorzugsweise weist das Bohrwerkzeug im schaftnahen Bereich zwei Spiralgänge auf. Es ist jedoch auch denkbar, dass das Bohrwerkzeug im bohrkopfnahen Bereich eine von vier abweichende Anzahl an Spiralgängen aufweist, wie beispielsweise zwei, drei, fünf, sechs o. dgl., und/oder dass das Bohrwerkzeug im schaftnahen Bereich eine von zwei abweichende Anzahl an Spiralgängen aufweist, wie beispielsweise eins, drei, vier o. dgl. Ein Fachmann wird eine, ihm sinnvoll erscheinende Anzahl an Spiralgängen im schaftnahen Bereich und/oder im bohrkopfnahen Bereich anordnen, insbesondere um ein Bohrwerkzeug zu erhalten, das an einen Einsatzzweck angepasst ist und insbesondere im bohrkopfnahen Bereich einen hohen Verschleißschutz aufweist und im schaftnahen Bereich einen besonders vorteilhaften Abtransport von Bohrabtrag ermöglicht. Mittels der erfindungsgemäßen Ausgestaltung des Bohrwerkzeugs kann im bohrkopfnahen Bereich des Bohrwerkzeugs, eine große Verschleißfläche und/oder eine große Anzahl an Spiralgängen realisiert werden im Vergleich zum schaftnahen Bereich, der, entlang der Rotationsachse ausgehend vom bohrkopfnahen Bereich betrachtet, nach dem Verschleißflächenübergang und/oder nach dem Spiralgangwechsel angeordnet ist, da insbesondere der bohrkopfnahe Bereich des Bohrwerkzeugs während einer Bearbeitung eines Werkstücks lange und oft mit dem zu bearbeitenden Werkstück in Kontakt kommt.

Ferner wird vorgeschlagen, dass ein Verhältnis des Minimalabstands zum maximalen Außendurchmesser größer ist als 1. Insbesondere ist ein Verhältnis des Minimalabstands zum maximalen Außendurchmesser größer ist als 1,5, bevorzugt größer als 2, besonders bevorzugt größer als 2,4 und ganz besonders bevorzugt kleiner als 10. Mittels der erfindungsgemäßen Ausgestaltung des Bohrwerkzeugs kann vorteilhaft in einem Bereich des Bohrwerkzeugs, in dem ein großer Beanspruchungsgrad bei einer Bearbeitung eines Werkstücks vorliegt, eine große Verschleißfläche und/oder eine große Anzahl an Spiralgängen realisiert werden im Vergleich zu einem Bereich, in dem ein kleiner Beanspruchungsgrad bei einer Bearbeitung eines Werkstücks vorliegt.

Des Weiteren wird vorgeschlagen, dass das Bohrwerkzeug eine maximale Nutzlänge aufweist, wobei ein Verhältnis des Minimalabstands zur maximalen Nutzlänge größer ist als 0,15. Insbesondere ist ein Verhältnis des Minimalabstands zur maximalen Nutzlänge größer als 0,18, bevorzugt größer als 0,2 und besonders bevorzugt größer als 0,25. Die maximale Nutzlänge des Bohrwerkzeugs erstreckt sich entlang einer zumindest im Wesentlichen parallel, insbesondere koaxial, zur Rotationsachse verlaufenden Richtung vorzugsweise ausgehend von der Bohrkopfspitze bis zum Schaft. Der/die Spiralgang/Spiralgänge ist/sind vorzugsweise auf eine, einem Fachmann bereits bekannte Art und Weise innerhalb eines durch die maximale Nutzlänge definierten Bereichs angeordnet. Der Bohrkopf ist auf eine, einem Fachmann bereits bekannte Art und Weise innerhalb eines durch die maximale Nutzlänge definierten Bereichs angeordnet. Mittels der erfindungsgemäßen Ausgestaltung des Bohrwerkzeugs kann im bohrkopfnahen Bereich des Bohrwerkzeugs, eine große Verschleißfläche und/oder eine große Anzahl an Spiralgängen realisiert werden im Vergleich zum schaftnahen Bereich, der, entlang der Rotationsachse ausgehend vom bohrkopfnahen Bereich betrachtet, nach dem Verschleißflächenübergang und/oder nach dem Spiralgangwechsel angeordnet ist, da insbesondere der bohrkopfnahe Bereich des Bohrwerkzeugs während einer Bearbeitung eines Werkstücks lange und oft mit dem zu bearbeitenden Werkstück in Kontakt kommt.

Zudem wird vorgeschlagen, dass das Bohrwerkzeug zumindest eine Bohrkopfspitze und zumindest einen Spiralgangwechsel umfasst, an dessen Position sich eine Anzahl an Spiralgängen ändert, wobei der Spiralgangwechsel und/oder der Verschleißflächenübergang in einem Bereich und/oder an einer Position entlang der Rotationsachse angeordnet sind/ist, der und/oder die einen Minimalabstand zur Bohrkopfspitze aufweisen/aufweist, der größer ist als ein zweifaches einer minimalen Ganghöhe, insbesondere eines absoluten Zahlenwerts der minimalen Ganghöhe, des Spiralgangs. Insbesondere ist der Minimalabstand zur Bohrkopfspitze größer als ein 2,2-faches, bevorzugt größer als ein 2,5-faches und besonders bevorzugt als ein dreifaches der minimalen Ganghöhe, insbesondere eines absoluten Zahlenwerts der minimalen Ganghöhe Die minimale Ganghöhe des Spiralgangs ist, wie dies einem Fachmann bereits bekannt ist, ein kleinster Abstand entlang einer zumindest im Wesentlichen parallel, insbesondere koaxial, zur Rotationsachse verlaufenden Richtung zwischen zwei Spiralgangmaximas eines einzelnen Spiralgangs. Mittels der erfindungsgemäßen Ausgestaltung des Bohrwerkzeugs kann vorteilhaft im bohrkopfnahen Bereich des Bohrwerkzeugs, eine große Verschleißfläche und/oder eine große Anzahl an Spiralgängen realisiert werden im Vergleich zum schaftnahen Bereich, der, entlang der Rotationsachse ausgehend vom bohrkopfnahen Bereich betrachtet, nach dem Verschleißflächenübergang und/oder nach dem Spiralgangwechsel angeordnet ist, da insbesondere der bohrkopfnahe Bereich des Bohrwerkzeugs während einer Bearbeitung eines Werkstücks lange und oft mit dem zu bearbeitenden Werkstück in Kontakt kommt.

Erfindungsgemäß wird vorgeschlagen, dass das Bohrwerkzeug zumindest einen weiteren Spiralgang aufweist, der sich entlang der Rotationsachse um die Rotationsachse windet, wobei der weitere Spiralgang in einem Nahbereich des Verschleißflächenübergangs in den Spiralgang übergeht oder endet. Unter einem "Nahbereich des Verschleißflächenübergangs" soll in diesem Zusammenhang insbesondere ein Bereich um den Verschleißflächenübergang verstanden werden, der, entlang der Rotationsachse betrachtet, einen maximalen Abstand von weniger als 50 mm, bevorzugt weniger als 10 mm und besonders bevorzugt weniger als 5 mm zum Verschleißflächenübergang aufweist. Der weitere Spiralgang kann am Verschleißflächenübergang in den Spiralgang übergehen. Bevorzugt geht der weitere Spiralgang am Spiralgangwechsel in den Spiralgang über. Insbesondere ist der weitere Spiralgang zumindest im Wesentlichen analog zum Spiralgang ausgebildet. Es kann besonders vorteilhaft im bohrkopfnahen Bereich des Bohrwerkzeugs, der, entlang der Rotationsachse betrachtet, vor dem Verschleißflächenübergang angeordnet ist, ein schneller Abtransport von Bohrmehl vom Bohrkopf des Bohrwerkzeugs bei einer Bearbeitung des Werkstücks erreicht werden. Zudem kann besonders vorteilhaft in einem Bereich des Bohrwerkzeugs, der, entlang der Rotationsachse betrachtet, nach dem Verschleißflächenübergang angeordnet ist, ein schneller Abtransport von Bohrmehl aus einem Bohrloch eines Werkstücks bei einer Bearbeitung des Werkstücks erreicht werden. Ferner kann vorteilhaft in einem Bereich des Bohrwerkzeugs, der, entlang einer Richtung der Rotationsachse des Bohrwerkzeugs betrachtet, nach dem Verschleißflächenübergang angeordnet ist, Reibung zwischen dem Bohrwerkzeug und einer Werkstückoberfläche bei einer Bearbeitung eines Werkstücks gering gehalten werden.

Des Weiteren wird erfindungsgemäß vorgeschlagen, dass der Verschleißflächenübergang abrupt ausgebildet ist. Bevorzugt erfolgt eine Änderung der Bandbreite, der Verschleißfläche, der Ganghöhe oder einer anderen, einem Fachmann als sinnvoll erscheinende Kenngröße der Verschleißfläche am Verschleißflächenübergang abrupt. Es kann vorteilhaft bei einer fließenden Ausgestaltung des Verschleißflächenübergangs eine stetige Kraftübertragung auf die Verschleißfläche ermöglicht werden. Es kann eine lange Haltbarkeit der Verschleißfläche erreicht werden. Bei einer abrupten Ausgestaltung des Verschleißflächenübergangs kann vorteilhaft eine hohe Kraftübertragung auf ein Werkstück ermöglicht werden. Es kann vorteilhaft eine kurze Bearbeitungszeit eines Werkstücks erreicht werden.

Ferner wird vorgeschlagen, dass sich ein maximaler Abstand der Verschleißfläche zur Rotationsachse, entlang der Rotationsachse betrachtet, nach dem Verschleißflächenübergang ändert. Insbesondere verläuft der maximale Abstand entlang einer zumindest im Wesentlichen senkrecht zur Rotationsachse verlaufenden Richtung. Vorzugsweise ist der maximale Abstand im schaftnahen Bereich im Vergleich zum maximalen Abstand im bohrkopfnahen Bereich groß. Besonders bevorzugt ist der maximale Abstand im bohrkopfnahen Bereich im Vergleich zum maximalen Abstand im schaftnahen Bereich klein. Bevorzugt nimmt der maximale Abstand, entlang der Rotationsachse ausgehend vom bohrkopfnahen Bereich in Richtung des Schafts betrachtet, nach dem Verschleißflächenübergang zu. Ebenso ist es denkbar, dass, entlang der Rotationsachse ausgehend vom bohrkopfnahen Bereich in Richtung des Schafts betrachtet, der maximale Abstand nach dem Verschleißflächenübergang abnimmt. Besonders bevorzugt ist der maximale Abstand, entlang der Rotationsachse ausgehend vom bohrkopfnahen Bereich betrachtet, nach dem Verschleißflächenübergang größer als vor dem Verschleißflächenübergang. Insbesondere nimmt der maximale Abstand nach dem Verschleißflächenübergang um mehr als 5 %, bevorzugt um mehr als 10 % und besonders bevorzugt um mehr als 25 % im Vergleich zu einer Ausgestaltung der Verschleißfläche vor dem Verschleißflächenübergang zu. Mittels der erfindungsgemäßen Ausgestaltung kann vorteilhaft eine große Stabilität des Bohrwerkzeugs, insbesondere bei einem langen Bohrwerkzeug, bei einer Bearbeitung eines Werkstücks ermöglicht werden. Des Weiteren kann vorteilhaft eine hohe Steifigkeit des Bohrwerkzeugs im schaftnahen Bereich des Bohrwerkzeugs erreicht werden. Zudem kann vorteilhaft eine Zentrierungsfunktion ermöglicht werden.

Zudem wird vorgeschlagen, dass das Bohrwerkzeug zumindest einen weiteren Verschleißflächenübergang aufweist, an dessen Position sich die Verschleißfläche verändert. Bevorzugt nimmt die Verschleißfläche, entlang der Rotationsachse ausgehend vom schaftnahen Bereich betrachtet, nach dem weiteren Verschleißflächenübergang ab. Besonders bevorzugt ist die Verschleißfläche, entlang der Rotationsachse ausgehend vom schaftnahen Bereich betrachtet, nach dem weiteren Verschleißflächenübergang kleiner als vor dem weiteren Verschleißflächenübergang. Vorteilhafterweise kann erreicht werden, dass in einem Bereich mit einer kleinen Verschleißfläche Reibung zwischen dem Bohrwerkzeug und einer Werkstückoberfläche bei einer Bearbeitung eines Werkstücks gering gehalten werden kann.

Erfindungsgemäß wird auch ein Verfahren durch die Merkmale des Anspruchs 13 definiert Des Weiteren geht die Erfindung aus von einem Verfahren, insbesondere einem spanabhebenden Verfahren, zu einer Herstellung eines Bohrwerkzeugs nach zumindest einem der vorhergehenden Ansprüche, wobei in zumindest einem Verfahrensschritt der zumindest eine, insbesondere erste, Spiralgang des Bohrwerkzeugs mit einem Werkzeug erzeugt wird.

Es wird vorgeschlagen, dass in zumindest einem Verfahrensschritt zumindest ein weiterer Spiralgang des Bohrwerkzeugs, der verschieden ist von dem, insbesondere ersten, Spiralgang, mit dem Werkzeug erzeugt wird. Insbesondere wird in maximal zwei Verfahrensschritten der, insbesondere erste, Spiralgang und der weitere Spiralgang mit demselben Werkzeug erzeugt. Es ist jedoch auch denkbar, dass der, insbesondere erste, Spiralgang und der weitere Spiralgang mit demselben Werkzeug in mehr als maximal zwei Verfahrensschritten erzeugbar sind. Bevorzugt erfolgt eine Erzeugung des Spiralgangs und des weiteren Spiralgangs werkzeugwechselfrei. Mittels des erfindungsgemäßen Verfahrens kann vorteilhaft eine zeit- und/oder kostensparende Herstellung eines Bohrwerkzeugs realisiert werden. Besonders vorteilhaft kann eine schnelle Taktung bei einer Herstellung eines Bohrwerkzeugs erreicht werden.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erstes Ausführungsbeispiel eines erfindungsgemäßen Bohrwerkzeugs für eine tragbare Werkzeugmaschine in einer schematischen Darstellung,
- Fig. 2: ein nicht erfindungsgemäßes Ausführungsbeispiel eines Bohrwerkzeugs für eine tragbare Werkzeugmaschine in einer schematischen Darstellung,
- Fig. 3: ein nicht erfindungsgemäßes Ausführungsbeispiel eines Bohrwerkzeugs für eine tragbare Werkzeugmaschine in einer schematischen Darstellung und
- Fig. 4: ein nicht erfindungsgemäßes usführungsbeispiel eines Bohrwerkzeugs für eine tragbare Werkzeugmaschine in einer schematischen Darstellung.

### Beschreibung der Ausführungsbeispiele

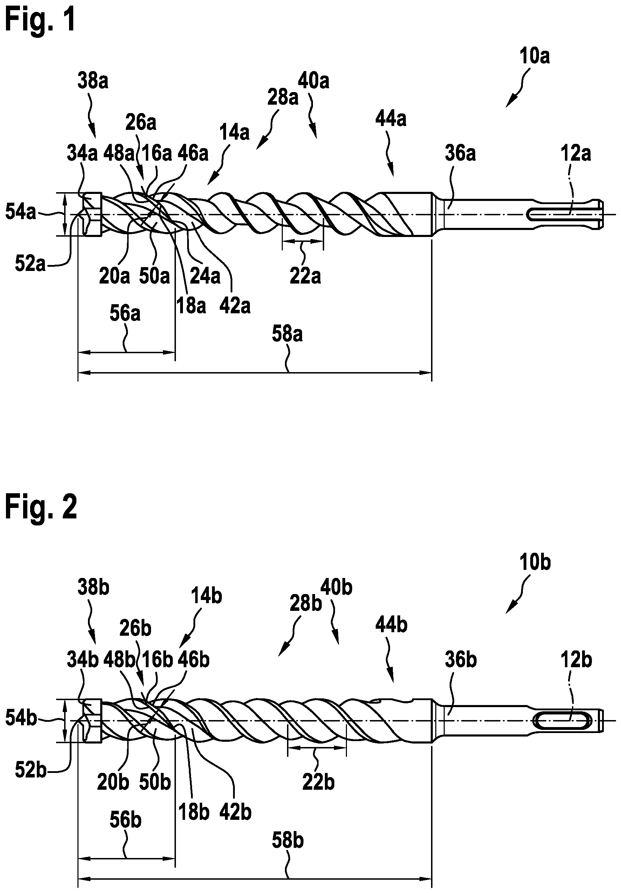

Figur 1 zeigt ein erstes Ausführungsbeispiel eines Bohrwerkzeugs 10a für eine tragbare Werkzeugmaschine (hier nicht näher dargestellt). Die tragbare Werkzeugmaschine weist eine, einem Fachmann bereits bekannte Ausgestaltung auf, wie beispielsweise eine Ausgestaltung als handgehaltene Bohrmaschine o. dgl., die zumindest eine Werkzeugaufnahme, insbesondere zumindest eine Bohrfutter, aufweist. Das Bohrwerkzeug 10a ist bevorzugt als Gesteinsbohrwerkzeug ausgebildet. Das Bohrwerkzeug 10a ist insbesondere aus einem Stahl gefertigt. Ebenso ist es denkbar, dass das Bohrwerkzeug 10a aus einem anderen, einem Fachmann als sinnvoll erscheinenden Material gefertigt ist. Das Bohrwerkzeug 10a umfasst eine Rotationsachse 12a und zumindest einen Spiralgang 14a, der sich entlang der Rotationsachse 12a um die Rotationsachse 12a windet. Dabei weist der Spiralgang 14a zumindest eine Verschleißfläche 16a auf. Vorzugsweise weist das Bohrwerkzeug 10a einen Bohrkopf 34a auf, der insbesondere aus einem Hartmetall gefertigt ist. Ferner umfasst das Bohrwerkzeug 10a zumindest einen Verschleißflächenübergang 18a, an dessen Position sich zumindest eine Bandbreite 20a der Verschleißfläche 16a verändert. Der Verschleißflächenübergang 18a erfolgt abrupt. Die Bandbreite 20a nimmt, entlang der Rotationsachse 12a betrachtet, nach dem Verschleißflächenübergang 18a ab. Insbesondere nimmt die Bandbreite 20a, entlang der Rotationsachse 12a ausgehend vom Bohrkopf 34a betrachtet, nach dem Verschleißflächenübergang 18a ab. Ferner nimmt die Verschleißfläche 16a, entlang der Rotationsachse 12a betrachtet, nach dem Verschleißflächenübergang 18a ab. Vorzugsweise nimmt die Verschleißfläche 16a, entlang der Rotationsachse 12a ausgehend vom Bohrkopf 34a betrachtet, nach dem Verschleißflächenübergang 18a ab. Ferner umfasst das Bohrwerkzeug 10a vorzugsweise einen Schaft 36a. Der Spiralgang 14a grenzt, entlang der Rotationsachse 12a betrachtet, in einem bohrkopfnahen Bereich 38a des Bohrwerkzeugs 10a direkt an den Bohrkopf 34a an. Vorzugsweise erstreckt sich der Spiralgang 14a, entlang der Rotationsachse 12a betrachtet, ausgehend vom Bohrkopf 34a des Bohrwerkzeugs 10a zumindest im Wesentlichen bis zum Schaft 36a des Bohrwerkzeugs 10a. Die Verschleißfläche 16a ist vorzugsweise, entlang der Rotationsachse 12a betrachtet, entlang eines Spiralkörpers 40a des Bohrwerkzeugs 10a ausgebildet. Vorzugsweise windet sich die Verschleißfläche 16a, entlang der Rotationsachse 12a betrachtet, zumindest im Wesentlichen direkt angrenzend an den Bohrkopf 34a des Bohrwerkzeugs 10a um die Rotationsachse 12a. Der Spiralgang 14a weist insbesondere zumindest eine Förderwendel 42a auf. Vorzugsweise windet sich die Förderwendel 42a, entlang der Rotationsachse 12a betrachtet, zumindest im Wesentlichen direkt angrenzend an den Bohrkopf 34a des Bohrwerkzeugs 10a um die Rotationsachse 12a. Vorzugsweise ist die Förderwendel 42a, entlang der Rotationsachse 12a betrachtet, entlang des Spiralkörpers 40a ausgebildet. Des Weiteren weist das Bohrwerkzeug 10a zumindest einen weiteren Spiralgang 26a auf, der sich entlang der Rotationsachse 12a um die Rotationsachse 12a windet. Dabei geht der weitere Spiralgang 26a in einem Nahbereich 28a des Verschleißflächenübergangs 18a in den Spiralgang 14a über. Die Förderwendel 50a geht im Nahbereich 28a des Verschleißflächenübergangs 18a in die Förderwendel 42a über. Die Verschleißfläche 16a weist eine Begrenzungskante 46a und eine weitere Begrenzungskante 48a auf. Die Begrenzungskante 46a grenzt direkt an die Förderwendel 42a des Spiralgangs 14a an. Die weitere Begrenzungskante 48a grenzt direkt an eine weitere Förderwendel 50a des weiteren Spiralgangs 26a an.

In dem in Figur 1 gezeigten Ausführungsbeispiel grenzen vier Spiralgänge 14a, 26a direkt an den Bohrkopf 34a an, die sich entlang der Rotationsachse 12a um die Rotationsachse 12a winden. Ebenso ist es denkbar, dass mehr oder weniger als vier Spiralgänge 14a, 26a direkt an den Bohrkopf 34a angrenzen, die sich entlang der Rotationsachse 12a um die Rotationsachse 12a winden. Ferner umfasst das Bohrwerkzeug 10a zumindest einen Spiralgangwechsel 24a, an dessen Position sich eine Anzahl an Spiralgängen 14a, 26a ändert. Erfindungsgemäß ändert sich an der Position des Verschleißflächenübergangs 18a die Anzahl an Spiralgängen 14a, 26a. Insbesondere ändert sich an der Position des Spiralgangwechsels 24a die Anzahl an Spiralgängen 14a, 26a von vier auf zwei. Ebenso ist es denkbar, dass sich an der Position des Spiralgangwechsels 24a die Anzahl an Spiralgängen 14a, 26a von vier auf drei oder von vier auf eins ändert. Zudem ist es denkbar, dass sich an der Position des Spiralgangwechsels 24a die Anzahl an Spiralgängen 14a, 26a von einer, einem Fachmann als sinnvoll erscheinende Anzahl auf eine andere, einem Fachmann als sinnvoll erscheinende Anzahl ändert. An der Position des Spiralgangwechsels 24a geht der weitere Spiralgang 26a in den Spiralgang 14a über. Ausgehend von der Position des Spiralgangwechsels 24a, entlang der Rotationsachse 12a betrachtet, winden sich insbesondere zwei Spiralgänge 14a, 26a entlang der Rotationsachse 12a um die Rotationsachse 12a bis zu einem schaftnahen Bereich 44a des Bohrwerkzeugs 10a. Insbesondere windet sich, ausgehend von der Position des Spiralgangwechsels 24a entlang der Rotationsachse 12a betrachtet, der Spiralgang 14a entlang der Rotationsachse 12a um die Rotationsachse 12a bis zum schaftnahen Bereich 44a. Ferner weist der Spiralgang 14a eine Ganghöhe 22a auf. Entlang der Rotationsachse 12a betrachtet verändert sich die Ganghöhe 22a des Spiralgangs 14a nach dem Verschleißflächenübergang 18a. Des Weiteren nimmt die Ganghöhe 22a, entlang der Rotationsachse 12a betrachtet, nach dem Verschleißflächenübergang 18a zu. Vorzugsweise nimmt die Ganghöhe 22a, ausgehend vom Bohrkopf 34a entlang der Rotationsachse 12a in Richtung des Schafts 36a, betrachtet, nach dem Verschleißflächenübergang 18a zu.

Das Bohrwerkzeug 10a umfasst zumindest einen maximalen Außendurchmesser 52a, insbesondere einen Nenndurchmesser, zumindest eine Bohrkopfspitze 54a und zumindest den Spiralgangwechsel 24a, an dessen Position sich eine Anzahl an Spiralgängen 14a, 26a ändert, wobei der Spiralgangwechsel 24a und/oder der Verschleißflächenübergang 18a in einem Bereich und/oder an einer Position entlang der Rotationsachse 12a angeordnet sind/ist, der und/oder die einen Minimalabstand 56a zur Bohrkopfspitze 54a aufweisen/aufweist, der größer ist als ein ganzzahliges Vielfaches des maximalen Außendurchmessers 52a. Der Minimalabstand 56a zur Bohrkopfspitze 54a ist vorzugsweise größer als ein zweifaches des maximalen Außendurchmessers 52a. Ein Verhältnis des Minimalabstands 56a zum maximalen Außendurchmesser 52a ist insbesondere größer als 1. Das Bohrwerkzeug 10a umfasst eine maximale Nutzlänge 58a, wobei ein Verhältnis des Minimalabstands 56a zur maximalen Nutzlänge 58a bevorzugt größer ist als 0,15. Das Bohrwerkzeug 10a umfasst zumindest die Bohrkopfspitze 54a und zumindest den Spiralgangwechsel 24a, an dessen Position sich eine Anzahl an Spiralgängen 14a, 26a ändert, wobei der Spiralgangwechsel 24a und/oder der Verschleißflächenübergang 18a in einem Bereich und/oder an einer Position entlang der Rotationsachse 12a angeordnet sind/ist, der und/oder die einen Minimalabstand 56a zur Bohrkopfspitze 54a aufweisen/aufweist, der größer ist als ein zweifaches einer minimalen Ganghöhe 22a des Spiralgangs 14a.

Am Spiralgangwechsel 24a und/oder am Verschleißflächenübergang 18a erfolgen/erfolgt vorzugsweise eine Querschnittsänderung und/oder eine Flächenträgheitsmomentänderung des Bohrwerkzeugs 10a. Eine Änderung eines Querschnitts und/oder eines Flächenträgheitsmoments des Bohrwerkzeugs 10a erfolgen/erfolgt am Spiralgangwechsel 24a und/oder am Verschleißflächenübergang 18a monoton. Mittels des Bohrwerkzeugs 10a kann vorteilhaft in einem Bereich des Bohrwerkzeugs 10a, in dem ein großer Beanspruchungsgrad bei einer Bearbeitung eines Werkstücks vorliegt, eine große Verschleißfläche 16a und/oder eine große Anzahl an Spiralgängen 16a, 26a realisiert werden im Vergleich zu einem Bereich, in dem ein kleiner Beanspruchungsgrad bei einer Bearbeitung eines Werkstücks vorliegt. Vorteilhafterweise kann im bohrkopfnahen Bereich 38a des Bohrwerkzeugs 10a, eine große Verschleißfläche 16a und/oder eine große Anzahl an Spiralgängen 16a, 26a realisiert werden im Vergleich zum schaftnahen Bereich 44a, der, entlang der Rotationsachse 12a ausgehend vom bohrkopfnahen Bereich 38a betrachtet, nach dem Verschleißflächenübergang 18a und/oder nach dem Spiralgangwechsel 24a angeordnet ist, da insbesondere der bohrkopfnahe Bereich des Bohrwerkzeugs während einer Bearbeitung eines Werkstücks lange und oft mit dem zu bearbeitenden Werkstück in Kontakt kommt.

Das Bohrwerkzeug 10a wird mittels eines Verfahrens, insbesondere mittels eines spanabhebenden Verfahrens, hergestellt, wobei in zumindest einem Verfahrensschritt der zumindest eine, insbesondere erste, Spiralgang 14a mit einem Werkzeug erzeugt wird. In zumindest einem Verfahrensschritt des Verfahrens wird zumindest der weitere Spiralgang 26a, der verschieden ist von dem, insbesondere ersten, Spiralgang 14a, mit dem Werkzeug erzeugt.

In den Figuren 2 bis 4 sind weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zu einer Unterscheidung der einzelnen Ausführungsbeispiele sind in den Figuren 1 bis 4 den jeweiligen Bezugszeichen die Buchstabe a bis d nachgestellt. In den Ausführungsbeispielen der Figuren 2 bis 4 ist der Buchstabe a durch die Buchstaben b bis d ersetzt.

Figur 2 zeigt ein Ausführungsbeispiel eines Bohrwerkzeugs 10b für eine tragbare Werkzeugmaschine (hier nicht näher dargestellt). Das Bohrwerkzeug 10b umfasst eine Rotationsachse 12b und zumindest einen Spiralgang 14b, der sich entlang der Rotationsachse 12b um die Rotationsachse 12b windet. Das Bohrwerkzeug 10b umfasst zumindest einen Verschleißflächenübergang 18b, an dessen Position sich zumindest eine Bandbreite 20b der Verschleißfläche 16b verändert. Die Bandbreite 20b nimmt, entlang der Rotationsachse 12b betrachtet, nach dem Verschleißflächenübergang 18b ab. Insbesondere nimmt die Bandbreite 20b, entlang der Rotationsachse 12b ausgehend von einem Bohrkopf 34b des Bohrwerkzeugs 10b betrachtet, nach dem Verschleißflächenübergang 18b ab. Der Verschleißflächenübergang 18b erfolgt fließend. Nach dem Verschleißflächenübergang 18b, entlang der Rotationsachse 12b ausgehend vom Bohrkopf 34b betrachtet, weist die Bandbreite 20b einen Wert von weniger als 1 mm und mehr als 0 mm auf. Das Bohrwerkzeug 10b umfasst zusätzlich zum Spiralgang 14b zumindest drei weitere Spiralgänge 26b. Insgesamt weist das Bohrwerkzeug 20b vier Spiralgänge 14b, 26b auf, die unterschiedlich voneinander oder analog zueinander ausgebildet sein können. Es ist jedoch auch denkbar, dass das Bohrwerkzeug 12b eine von vier abweichende Anzahl an Spiralgängen 14b, 26b. aufweist. Die vier Spiralgänge 14b, 26b grenzen direkt an den Bohrkopf 34b an, und winden sich entlang der Rotationsachse 12b um die Rotationsachse 12b bis zu einem schaftnahen Bereich 44b des Bohrwerkzeugs 10b. Das Bohrwerkzeug 10b ist frei von einem Spiralgangwechsel ausgebildet. Entlang der Rotationsachse 12b betrachtet ist eine Anzahl an Spiralgängen gleichbleibend. Des Weiteren weist der Spiralgänge 14b eine Ganghöhe 22b auf. Entlang der Rotationsachse 12b betrachtet, ist die Ganghöhe 22b des Spiralgangs 14b nach dem Verschleißflächenübergang 18b gleichbleibend. Hinsichtlich weiterer Merkmale und Funktionen des in der Figur 2 dargestellten Bohrwerkzeugs 10b darf auf die Beschreibung des in der Figur 1 dargestellten Bohrwerkzeugs 10a verwiesen werden.

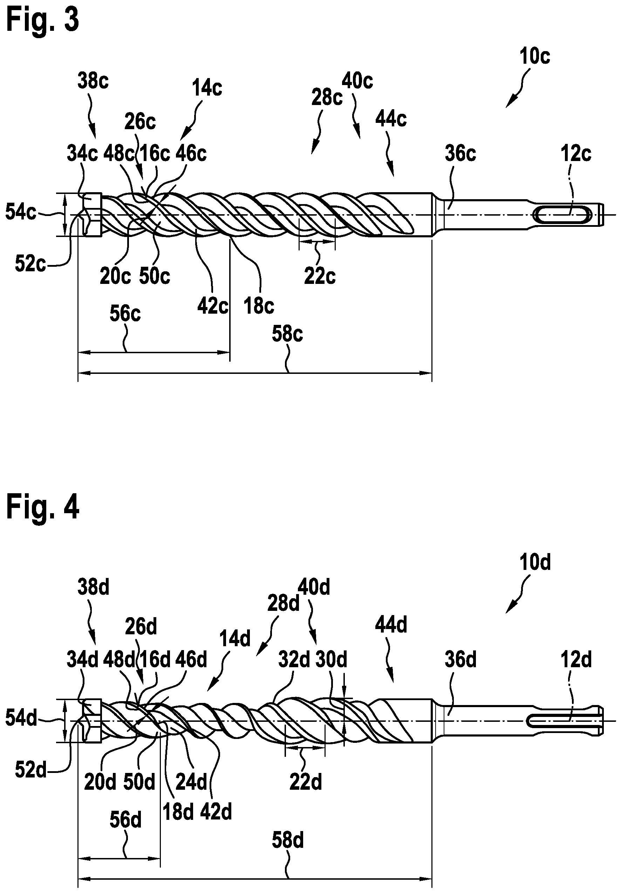

Figur 3 zeigt ein Ausführungsbeispiel eines Bohrwerkzeugs 10c für eine tragbare Werkzeugmaschine (hier nicht näher dargestellt). Das Bohrwerkzeug 10c umfasst eine Rotationsachse 12c und zumindest einen Spiralgang 14c, der sich entlang der Rotationsachse 12c um die Rotationsachse 12c windet. Das Bohrwerkzeug 10c umfasst zumindest einen Verschleißflächenübergang 18c, an dessen Position sich zumindest eine Bandbreite 20c der Verschleißfläche 16c verändert. Die Bandbreite 20c nimmt, entlang der Rotationsachse 12c betrachtet, nach dem Verschleißflächenübergang 18c ab. Insbesondere nimmt die Bandbreite 20c, entlang der Rotationsachse 12c ausgehend von einem Bohrkopf 34c des Bohrwerkzeugs 10c betrachtet, nach dem Verschleißflächenübergang 18c ab. Eine Änderung der Bandbreite 20c erfolgt am Verschleißflächenübergang 18c fließend. Nach dem Verschleißflächenübergang 18c, entlang der Rotationsachse 12c ausgehend vom Bohrkopf 34c in Richtung eines Schafts 36c des Bohrwerkzeugs 10c betrachtet, weist die Bandbreite 20c einen Wert von zumindest 30 % eines Wertes der Bandbreite 20c vor dem Verschleißflächenübergang 18c auf. Das Bohrwerkzeug 10c umfasst zusätzlich zum Spiralgang 14c zumindest drei weitere Spiralgänge 26c. Insgesamt weist das Bohrwerkzeug 12c vier Spiralgänge 14c, 26c auf, die unterschiedlich voneinander oder analog zueinander ausgebildet sein können. Es ist jedoch auch denkbar, dass das Bohrwerkzeug 12c eine von vier abweichende Anzahl an Spiralgängen 14c, 26c. aufweist. Die vier Spiralgänge 14c, 26c grenzen direkt an den Bohrkopf 34c an, und winden sich entlang der Rotationsachse 12c um die Rotationsachse 12c bis zu einem schaftnahen Bereich 44c des Bohrwerkzeugs 10c. Ferner ist das Bohrwerkzeug 10c frei von einem Spiralgangwechsel ausgebildet. Entlang der Rotationsachse 12c betrachtet, ist eine Anzahl an Spiralgängen14c, 26c gleichbleibend. Des Weiteren weist der Spiralgang 14c eine Ganghöhe 22c auf.

Entlang der Rotationsachse 12c betrachtet, ist die Ganghöhe 22c des Spiralgangs 14c nach dem Verschleißflächenübergang 18c gleichbleibend. Hinsichtlich weiterer Merkmale und Funktionen des in der Figur 3 dargestellten Bohrwerkzeugs 10c darf auf die Beschreibung des in der Figur 1 dargestellten Bohrwerkzeugs 10a verwiesen werden.

Figur 4 zeigt ein Ausführungsbeispiel eines Bohrwerkzeugs 10d für eine tragbare Werkzeugmaschine (hier nicht näher dargestellt). Das Bohrwerkzeug 10d umfasst eine Rotationsachse 12d und zumindest einen Spiralgang 14d, der sich entlang der Rotationsachse 12d um die Rotationsachse 12d windet. Das Bohrwerkzeug 10d umfasst zumindest einen Verschleißflächenübergang 18d, an dessen Position sich zumindest eine Bandbreite 20d der Verschleißfläche 16d verändert. Das Bohrwerkzeug 10d umfasst zumindest einen weiteren Verschleißflächenübergang 32d, an dessen Position sich die Verschleißfläche 16d verändert. Vorzugsweise nimmt die Verschleißfläche 16d an dem zumindest einen weiteren Verschleißflächenübergang 32d, entlang der Rotationsache 12d ausgehend von einem Bohrkopf 34d des Bohrwerkzeugs 10d in Richtung eines Schafts 36d des Bohrwerkzeugs 10d betrachtet, zu. Der weitere Verschleißflächenübergang 32d ist fließend ausgebildet. Eine Zunahme der Verschleißfläche 16d erfolgt am weiteren Verschleißflächenübergang 32d fließend. Ferner ändert sich ein maximaler Abstand 30d der Verschleißfläche 16d zur Rotationsachse 12d, entlang der Rotationsachse 12d betrachtet, nach dem Verschleißflächenübergang 18d. Insbesondere ändert sich der maximale Abstand 30d der Verschleißfläche 16d zur Rotationsachse 12d, entlang der Rotationsachse 12d ausgehend von einem Bohrkopf 34d des Bohrwerkzeugs 34d in Richtung des Schafts 36d des Bohrwerkzeugs 10d betrachtet, nach dem Verschleißflächenübergang 18d. Bevorzugt ändert sich der maximale Abstand 30d der Verschleißfläche 16d gegenüber der Rotationsachse 12d, entlang der Rotationsachse 12d ausgehend vom Bohrkopf 34d in Richtung eines Schafts 36d des Bohrwerkzeugs 10d betrachtet, nach dem weiteren Verschleißflächenübergang 32d. Besonders bevorzugt nimmt der maximale Abstand 30d der Verschleißfläche 16d gegenüber der Rotationsachse 12d, entlang der Rotationsachse 12d ausgehend vom Bohrkopf 34d in Richtung des Schafts 36d des Bohrwerkzeugs 10d betrachtet, nach dem weiteren Verschleißflächenübergang 32d zu. Besonders bevorzugt nimmt an der Position des weiteren Verschleißflächenübergangs 32d die Bandbreite 20d der Verschleißfläche 16d zu. Insbesondere nimmt die Bandbreite 20d, entlang der Rotationsachse 12d betrachtet, nach dem Verschleißflächenübergang 16d zu. Hinsichtlich weiterer Merkmale und Funktionen des in der Figur 4 dargestellten Bohrwerkzeugs 10d darf auf die Beschreibung des in der Figur 1 dargestellten Bohrwerkzeugs 10a verwiesen werden.

## Patentansprüche

1. Bohrwerkzeug, insbesondere Gesteinsbohrwerkzeug, für eine tragbare Werkzeugmaschine, mit einer Rotationsachse (12a; 12b; 12c; 12d) und mit zumindest einem Spiralgang (14a; 14b; 14c; 14d), der sich entlang der Rotationsachse (12a; 12b; 12c; 12d) um die Rotationsachse (12a; 12b; 12c; 12d) windet, wobei der Spiralgang (14a; 14b; 14c; 14d) zumindest eine Verschleißfläche (16a; 16b; 16c; 16d) aufweist, mit zumindest einen Verschleißflächenübergang (18a; 18b; 18c; 18d), an dessen Position sich zumindest eine Bandbreite (20a; 20b; 20c; 20d) der Verschleißfläche (16a; 16b; 16c; 16d) verändert, **dadurch gekennzeichnet, dass** das Bohrwerkzeug zumindest einen Spiralgangwechsel (24a; 24d) aufweist, an dessen Position sich eine Anzahl an Spiralgängen (14a, 26a; 14d, 26d) ändert, wobei zumindest ein weiterer Spiralgang (26a; 26d), der sich entlang der Rotationsachse (12a; 12d) um die Rotationsachse (12a; 12d) windet, in einem Nahbereich (28a; 28d) des Verschleißflächenübergangs (18a; 18d) in den Spiralgang (14a; 14d) übergeht oder endet, wobei der Verschleißflächenübergang (18a; 18d) abrupt ausgebildet ist.

2. Bohrwerkzeug nach Anspruch 1, **dadurch gekennzeichnet, dass** die Bandbreite (20a; 20b; 20c; 20d), entlang der Rotationsachse (12a; 12b; 12c; 12d) betrachtet, nach dem Verschleißflächenübergang (18a; 18b; 18c; 18d) abnimmt.

3. Bohrwerkzeug nach einem der vorhergehenden Ansprüche, **dadurch gekennzeichnet, dass** die Verschleißfläche (16a; 16b; 16c; 16d), entlang der Rotationsachse (12a; 12b; 12c; 12d) betrachtet, nach dem Verschleißflächenübergang (18a; 18b; 18c; 18d) abnimmt.

4. Bohrwerkzeug nach einem der vorhergehenden Ansprüche, **dadurch gekennzeichnet, dass** sich eine Ganghöhe (22a; 22d) des zumindest einen Spiralgangs (14a; 14d), entlang der Rotationsachse (12a; 12d) betrachtet, nach dem Verschleißflächenübergang (18a; 18d) verändert.

5. Bohrwerkzeug nach Anspruch 4, **dadurch gekennzeichnet, dass** die Ganghöhe (22a; 22d), entlang der Rotationsachse (12a; 12d) betrachtet, nach dem Verschleißflächenübergang (18a; 18d) zunimmt.

6. Bohrwerkzeug nach einem der vorhergehenden Ansprüche, **gekennzeichnet durch** zumindest einen maximalen Außendurchmesser (52a; 52b; 52c; 52d), insbesondere einen Nenndurchmesser, zumindest eine Bohrkopfspitze (54a; 54b; 54c; 54d) und zumindest einen Spiralgangwechsel (24a; 24d), an dessen Position sich eine Anzahl an Spiralgängen (14a, 26a; 14d, 26d) ändert, wobei der Spiralgangwechsel (24a; 24d) und/oder der Verschleißflächenübergang (18a; 18b; 18c; 18d) in einem Bereich und/oder an einer Position entlang der Rotationsachse (12a; 12b; 12c; 12d) angeordnet sind/ist, der und/oder die einen Minimalabstand (56a; 56b; 56c; 56d) zur Bohrkopfspitze (54a; 54b; 54c; 54d) aufweisen/aufweist, der größer ist als ein ganzzahliges Vielfaches des maximalen Außendurchmessers (52a; 52b; 52c; 52d).

7. Bohrwerkzeug nach Anspruch 6, **dadurch gekennzeichnet, dass** der Minimalabstand (56a; 56b; 56c; 56d) zur Bohrkopfspitze (54a; 54b; 54c; 54d) größer ist als ein zweifaches des maximalen Außendurchmessers (52a; 52b; 52c; 52d).

8. Bohrwerkzeug nach Anspruch 6 oder 7, **dadurch gekennzeichnet, dass** ein Verhältnis des Minimalabstands (56a; 56b; 56c; 56d) zum maximalen Außendurchmesser (52a; 52b; 52c; 52d) größer ist als 1.

9. Bohrwerkzeug nach einem der Ansprüche 6 bis 8, **gekennzeichnet durch** eine maximale Nutzlänge (58a; 58b; 58c; 58d), wobei ein Verhältnis des Minimalabstands (56a; 56b; 56c; 56d) zur maximalen Nutzlänge (58a; 58b; 58c; 58d) größer ist als 0,15.

10. Bohrwerkzeug nach einem der vorhergehenden Ansprüche, **gekennzeichnet durch** zumindest eine Bohrkopfspitze (54a; 54b; 54c; 54d) und zumindest einen Spiralgangwechsel (24a; 24d), an dessen Position sich eine Anzahl an Spiralgängen (14a, 26a; 14d, 26d) ändert, wobei der Spiralgangwechsel (24a; 24d) und/oder der Verschleißflächenübergang (18a; 18b; 18c; 18d) in einem Bereich und/oder an einer Position entlang der Rotationsachse (12a; 12b; 12c; 12d) angeordnet sind/ist, der und/oder die einen Minimalabstand (56a; 56b; 56c; 56d) zur Bohrkopfspitze (54a; 54b; 54c; 54d) aufweisen/aufweist, der größer ist als ein zweifaches einer minimalen Ganghöhe (22a; 22b; 22c; 22d) des Spiralgangs (14a; 14b; 14c; 14d).

11. Bohrwerkzeug nach einem der vorhergehenden Ansprüche, **dadurch gekennzeichnet, dass** sich zumindest ein maximaler Abstand (30d) der Verschleißfläche (16d) zur Rotationsachse (12d), entlang der Rotationsachse (12d) betrachtet, nach dem Verschleißflächenübergang (18d) ändert.

12. Bohrwerkzeug nach einem der vorhergehenden Ansprüche, **gekennzeichnet durch** zumindest einen weiteren Verschleißflächenübergang (32d), an dessen Position sich die Verschleißfläche (16d) verändert.

13. Verfahren, insbesondere ein spanabhebendes Verfahren, zu einer Herstellung eines Bohrwerkzeugs (10a; 10b; 10c; 10d) nach zumindest einem der vorhergehenden Ansprüche, wobei in zumindest einem Verfahrensschritt der zumindest eine, insbesondere erste, Spiralgang (14a; 14b; 14c; 14d) des Bohrwerkzeugs (10a; 10b; 10c; 10d) mit einem Werkzeug erzeugt wird, **dadurch gekennzeichnet, dass** in zumindest einem Verfahrensschritt zumindest ein weiterer Spiralgang (26a; 26b; 26c; 26d) des Bohrwerkzeugs (10a; 10b; 10c; 10d), der verschieden ist von dem, insbesondere ersten, Spiralgang (14a; 14b; 14c; 14d), mit dem Werkzeug erzeugt wird.

## Claims

1. Drilling tool, in particular rock drilling tool, for a portable machine tool, with an axis of rotation (12a; 12b; 12c; 12d) and with at least one spiral thread (14a; 14b; 14c; 14d) which is wound around the axis of rotation (12a; 12b; 12c; 12d) along the axis of rotation (12a; 12b; 12c; 12d), wherein the spiral thread (14a; 14b; 14c; 14d) has at least one wearing surface (16a; 16b; 16c; 16d), with at least one wearing surface transition (18a; 18b; 18c; 18d), at the position of which at least one width (20a; 20b; 20c; 20d) of the wearing surface (16a; 16b; 16c; 16d) is changed, **characterized in that** the drilling tool has at least one spiral thread change (24a; 24d), at the position of which a number of spiral threads (14a, 26a; 14d, 26d) is changed, wherein at least one further spiral thread (26a; 26d) which is wound around the axis of rotation (12a; 12d) along the axis of rotation (12a; 12d) merges into or ends in the spiral thread (14a; 14d) in an immediate vicinity (28a; 28d) of the wearing surface transition (18a; 18d), wherein the wearing surface transition (18a; 18d) is formed in an abrupt manner.

2. Drilling tool according to Claim 1, **characterized in that** the width (20a; 20b; 20c; 20d) decreases downstream of the wearing surface transition (18a; 18b; 18c; 18d), as viewed along the axis of rotation (12a; 12b; 12c; 12d).

3. Drilling tool according to either of the preceding claims, **characterized in that** the wearing surface (16a; 16b; 16c; 16d) decreases downstream of the wearing surface transition (18a; 18b; 18c; 18d), as viewed along the axis of rotation (12a; 12b; 12c; 12d).

4. Drilling tool according to one of the preceding claims, **characterized in that** a thread height (22a; 22d) of the at least one spiral thread (14a; 14d) is changed downstream of the wearing surface transition (18a; 18d), as viewed along the axis of rotation (12a; 12d).

5. Drilling tool according to Claim 4, **characterized in that** the thread height (22a; 22d) increases downstream of the wearing surface transition (18a; 18d), as viewed along the axis of rotation (12a; 12d).

6. Drilling tool according to one of the preceding claims, **characterized by** at least one maximum outer diameter (52a; 52b; 52c; 52d), in particular a nominal diameter, at least one drilling head tip (54a; 54b; 54c; 54d) and at least one spiral thread change (24a; 24d), at the position of which a number of spiral threads (14a, 26a; 14d, 26d) is changed, wherein the spiral thread change (24a; 24d) and/or the wearing surface transition (18a; 18b; 18c; 18d) are/is arranged in a region and/or at a position along the axis of rotation (12a; 12b; 12c; 12d) which are/is at a minimum distance (56a; 56b; 56c; 56d) from the drilling head tip (54a; 54b; 54c; 54d) that is greater than an integral multiple of the maximum outer diameter (52a; 52b; 52c; 52d).

7. Drilling tool according to Claim 6, **characterized in that** the minimum distance (56a; 56b; 56c; 56d) from the drilling head tip (54a; 54b; 54c; 54d) is greater than twice the maximum outer diameter (52a; 52b; 52c; 52d) .

8. Drilling tool according to Claim 6 or 7, **characterized in that** a ratio of the minimum distance (56a; 56b; 56c; 56d) to the maximum outer diameter (52a; 52b; 52c; 52d) is greater than 1.

9. Drilling tool according to one of Claims 6 to 8, **characterized by** a maximum useful length (58a; 58b; 58c; 58d), wherein a ratio of the minimum distance (56a; 56b; 56c; 56d) to the maximum useful length (58a; 58b; 58c; 58d) is greater than 0.15.

10. Drilling tool according to one of the preceding claims, **characterized by** at least one drilling head tip (54a; 54b; 54c; 54d) and at least one spiral thread change (24a; 24d), at the position of which a number of spiral threads (14a, 26a; 14d, 26d) is changed, wherein the spiral thread change (24a; 24d) and/or the wearing surface transition (18a; 18b; 18c; 18d) are/is arranged in a region and/or at a position along the axis of rotation (12a; 12b; 12c; 12d) which are/is at a minimum distance (56a; 56b; 56c; 56d) from the drilling head tip (54a; 54b; 54c; 54d) that is greater than twice a minimum thread height (22a; 22b; 22c; 22d) of the spiral thread (14a; 14b; 14c; 14d).

11. Drilling tool according to one of the preceding claims, **characterized in that** at least a maximum distance (30d) of the wearing surface (16d) from the axis of rotation (12d) is changed downstream of the wearing surface transition (18d), as viewed along the axis of rotation (12d).

12. Drilling tool according to one of the preceding claims, **characterized by** at least one further wearing surface transition (32d), at the position of which the wearing surface (16d) is changed.

13. Method, in particular a metal-cutting method, for producing a drilling tool (10a; 10b; 10c; 10d) according to at least one of the preceding claims, wherein, in at least one method step, the at least one, in particular first, spiral thread (14a; 14b; 14c; 14d) of the drilling tool (10a; 10b; 10c; 10d) is produced with a tool, **characterized in that,** in at least one method step, at least one further spiral thread (26a; 26b; 26c; 26d) of the drilling tool (10a; 10b; 10c; 10d), that is different from the, in particular first, spiral thread (14a; 14b; 14c; 14d), is produced with the tool.

## Revendications

1. Outil de forage, en particulier outil de forage de roche, pour une machine-outil portative, comprenant un axe de rotation (12a ; 12b ; 12c ; 12d) et au moins une spire hélicoïdale (14a ; 14b ; 14c ; 14d) qui s'enroule le long de l'axe de rotation (12a ; 12b ; 12c ; 12d) autour de l'axe de rotation (12a ; 12b ; 12c ; 12d), dans lequel la spire hélicoïdale (14a ; 14b ; 14c ; 14d) présente au moins une surface d'usure (16a ; 16b ; 16c ; 16d) pourvue d'au moins une transition de surface d'usure (18a ; 18b ; 18c ; 18d) à la position de laquelle au moins une largeur de bande (20a ; 20b ; 20c ; 20d) de la surface d'usure (16a ; 16b ; 16c ; 16d) varie,
**caractérisé en ce que** l'outil de forage présente au moins un changement de spire hélicoïdale (24a ; 24d) à la position duquel un nombre de spires hélicoïdales (14a, 26a ; 14d, 26d) varie, dans lequel au moins une autre spire hélicoïdale (26a ; 26d) qui s'enroule le long de l'axe de rotation (12a ; 12d) autour de l'axe de rotation (12a ; 12d) passe à ou se termine au niveau de la spire hélicoïdale (14a ; 14d) dans une zone proche (28a ; 28d) de la transition de surface d'usure (18a ; 18d), la transition de surface d'usure (18a ; 18d) étant réalisée brusquement.

2. Outil de forage selon la revendication 1, **caractérisé en ce que** la largeur de bande (20a ; 20b ; 20c ; 20d), vue le long de l'axe de rotation (12a ; 12b ; 12c ; 12d), diminue après la transition de surface d'usure (18a ; 18b ; 18c ; 18d).

3. Outil de forage selon l'une quelconque des revendications précédentes, **caractérisé en ce que** la surface d'usure (16a ; 16b ; 16c ; 16d), vue le long de l'axe de rotation (12a ; 12b ; 12c ; 12d), diminue après la transition de surface d'usure (18a ; 18b ; 18c ; 18d).

4. Outil de forage selon l'une quelconque des revendications précédentes, **caractérisé en ce qu'**une hauteur de spire (22a ; 22d) de ladite au moins une spire hélicoïdale (14a ; 14d), vue le long de l'axe de rotation (12a ; 12d), varie après la transition de surface d'usure (18a ; 18d).

5. Outil de forage selon la revendication 4, **caractérisé en ce que** la hauteur de spire (22a ; 22d), vue le long de l'axe de rotation (12a ; 12d), augmente après la transition de surface d'usure (18a ; 18d).

6. Outil de forage selon l'une quelconque des revendications précédentes, **caractérisé par** au moins un diamètre extérieur maximal (52a ; 52b ; 52c ; 52d), en particulier un diamètre nominal, au moins une pointe de tête de forage (54a ; 54b ; 54c ; 54d) et au moins un changement de spire hélicoïdale (24a ; 24d) à la position duquel un nombre de spires hélicoïdales (14a, 26a ; 14d, 26d) varie, dans lequel le changement de spire hélicoïdale (24a ; 24d) et/ou la transition de surface d'usure (18a ; 18b ; 18c ; 18d) sont disposés dans une zone et/ou dans une position le long de l'axe de rotation (12a ; 12b ; 12c ; 12d) qui présente (nt) une distance minimale (56a ; 56b ; 56c ; 56d) par rapport à la pointe de tête de forage (54a ; 54b ; 54c ; 54d) qui est supérieure à un multiple entier du diamètre extérieur maximal (52a ; 52b ; 52c ; 52d).

7. Outil de forage selon la revendication 6, **caractérisé en ce que** la distance minimale (56a ; 56b ; 56c ; 56d) par rapport à la pointe de tête de forage (54a ; 54b ; 54c ; 54d) est supérieure à deux fois le diamètre extérieur maximal (52a ; 52b ; 52c ; 52d).

8. Outil de forage selon la revendication 6 ou 7, **caractérisé en ce qu'**un rapport entre la distance minimale (56a ; 56b ; 56c ; 56d) et le diamètre extérieur maximal (52a ; 52b ; 52c ; 52d) est supérieur à 1.

9. Outil de forage selon l'une quelconque des revendications 6 à 8, **caractérisé par** une longueur utile maximale (58a ; 58b ; 58c ; 58d), dans lequel un rapport entre la distance minimale (56a ; 56b ; 56c ; 56d) et la longueur utile maximale (58a ; 58b ; 58c ; 58d) est supérieur à 0,15.

10. Outil de forage selon l'une quelconque des revendications précédentes, **caractérisé par** au moins une pointe de tête de forage (54a ; 54b ; 54c ; 54d) et au moins un changement de spire hélicoïdale (24a ; 24d) à la position duquel un nombre de spires hélicoïdales (14a, 26a ; 14d, 26d) varie, dans lequel le changement de spire hélicoïdale (24a ; 24d) et/ou la transition de surface d'usure (18a ; 18b ; 18c ; 18d) sont disposés dans une zone et/ou dans une position le long de l'axe de rotation (12a ; 12b ; 12c ; 12d) qui présente (nt) une distance minimale (56a ; 56b ; 56c ; 56d) par rapport à la pointe de tête de forage (54a ; 54b ; 54c ; 54d) qui est supérieure à deux fois une hauteur de spire minimale (22a ; 22b ; 22c ; 22d) de la spire hélicoïdale (14a ; 14b ; 14c ; 14d).

11. Outil de forage selon l'une quelconque des revendications précédentes, **caractérisé en ce qu'**au moins une distance maximale (30d) de la surface d'usure (16d) par rapport à l'axe de rotation (12d), vue le long de l'axe de rotation (12d), varie après la transition de surface d'usure (18d).

12. Outil de forage selon l'une quelconque des revendications précédentes, **caractérisé par** au moins une autre transition de surface d'usure (32d) à la position de laquelle la surface d'usure (16d) varie.

13. Procédé, en particulier procédé par enlèvement de copeaux, pour la fabrication d'un outil de forage (10a ; 10b ; 10c ; 10d) selon au moins l'une des revendications précédentes, dans lequel dans au moins une étape de procédé, ladite au moins une, en particulier la première, spire hélicoïdale (14a ; 14b ; 14c ; 14d) de l'outil de forage (10a ; 10b ; 10c ; 10d) est créée à l'aide d'un outil, **caractérisé en ce que** dans au moins une étape de procédé, au moins une autre spire hélicoïdale (26a ; 26b ; 26c ; 26d) de l'outil de forage (10a ; 10b ; 10c ; 10d), qui est différente de ladite, en particulier de la première, spire hélicoïdale (14a ; 14b ; 14c ; 14d), est créée à l'aide de l'outil.
